# EUROPEAN PATENT APPLICATION

(11) **EP 2 105 834 A1**
(43) Date of publication of application: **30.09.2009**
(21) Application number: 08253989.1
(22) Date of filing: 12.12.2008
(51) Int. Cl.: G06F 9/445

(54) **Method for booting computer device**

(30) Priority: 28.03.2008 TW 97111535
(71) Applicant: ASUSTeK Computer Inc., Peitou Taipei (TW)
(72) Inventor: Yu, Yi-Teng, Peitou Taipei (TW)
(74) Representative: Johnson, Terence Leslie

(57) **Abstract**

A method for booting a computer device (100) includes steps of executing the POST and loading a commercial film form a storage unit (110 or 114) into a volatile memory unit (108), wherein the computer device (100) can update the commercial film via connecting to a network. Then the operating system is loaded.

## Description

### BACKGROUND OF THE INVENTION

### Field of the Invention

The invention relates to a booting procedure and, more particularly, to a booting procedure having a function of playing video film.

### Description of the Related Art

The code of a basic input output system (BIOS) is generally stored in a non-volatile memory such as a flash memory. Generally speaking, the main functions of the BIOS includes executing the power-on self-test (POST), initiating devices, storing the system settings, providing a resident program database, and assisting in loading an operation system (OS).

Conventionally, the computer device loads the BIOS stored in the non-volatile memory into the memory and operates the booting procedure when the computer is booting. At that time, the screen of the display shows a string of testing text message, which makes user feel boring during the booting procedure.

### BRIEF SUMMARY OF THE INVENTION

According to the invention there is provided a method for booting a computer device, comprising steps of: executing the power-on self-test (POST); loading a commercial film from a storage unit into a volatile memory unit, wherein the computer device updates the commercial film via connecting to a network according to a presetting; playing the commercial film during the time of booting the computer device; and loading a first operating system.

The booting method of the invention thus includes the steps of executing POST and loading a commercial film from a storage unit into a volatile memory unit, wherein the computer device can update the commercial film via connecting to a network according to a presetting during the booting time. Then, the commercial film can be played during the time of booting the computer device. Finally, the first operation system is loaded to make the computer device normally operating.

Thus using the invention, there is provided a method of booting a computer device which can utilize the time during which the user is waiting for booting the computer device to achieve the commercial effect.

In an embodiment of the invention, the computer device can update the commercial film via connecting to a remote server in the network.

In some embodiments, the format of the commercial film is MPEG-1, MPEG-2, MPEG-4, WMV, or RM format.

Besides that, the storage unit stored the commercial film can be a hard disk or an external storage unit.

The commercial film is played during the time of booting the computer device according to the invention. Therefore, a user would not be bored during the booting time and the objective of promoting the product is achieved.

These and other features, aspects, and advantages of the present invention will become better understood with regard to the following description, appended claims, and accompanying schematic drawings.

### BRIEF DESCRIPTION OF THE DRAWINGS

Fig.1 is a system block diagram of a computer device;
Fig. 2 is a configuration diagram showing the BIOS in the preferred embodiment of the invention;
Fig. 3 is a flow chart showing the steps of setting the BIOS;
Fig. 4 is a flowchart of the computer device booting method according to the preferred embodiment of the invention; and
Fig. 5 is a flowchart showing the method of updating the video file.

### DETAILED DESCRIPTION OF THE EMBODIMENTS

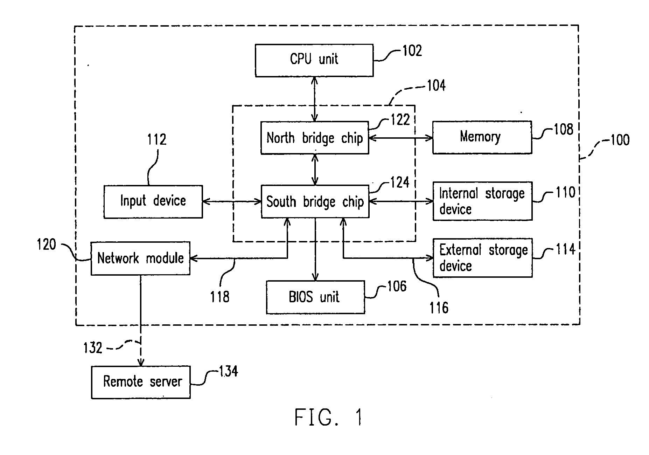

Fig.1 is a system block diagram of a computer device. Refer to Fig. 1. The computer device 100 includes a central processing unit (CPU) 102, a chipset 104, and a BIOS unit 106. Furthermore, the computer device 100 can also include a memory 108, an internal storage device 110, and an input device 112. In other embodiments, an external storage device 114, such as a portable USB disk, can be coupled with the computer device 100 via a data transmitting interface 116.

In the computer device 100, the CPU 102 can be coupled with the chipset 104. In some embodiments, the chipset 104 can includes a north bridge chip 122 and a south bridge chip 124. The CPU 102 can be coupled with the memory 108 and the south bridge chip 124 via the north bridge chip 122. The south bridge chip 124 can be coupled with the BIOS unit 106, the internal storage device 110 such as hard disk, the input device 112 such as keyboard or mouse, and the data transmitting interface 116 such as USB.

In the embodiment, the south bridge chip 124 can be coupled with a network module 120 via another data transmitting interface 118. In the embodiment, the network module 120 is a network card which can be connected to the internet 132. Therefore, the computer device 100 can be connected to a remote server 134 in the internet 132.

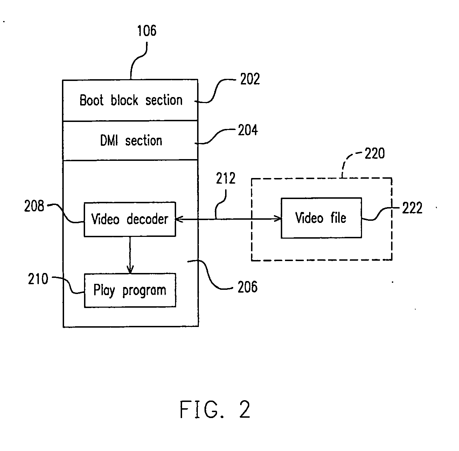

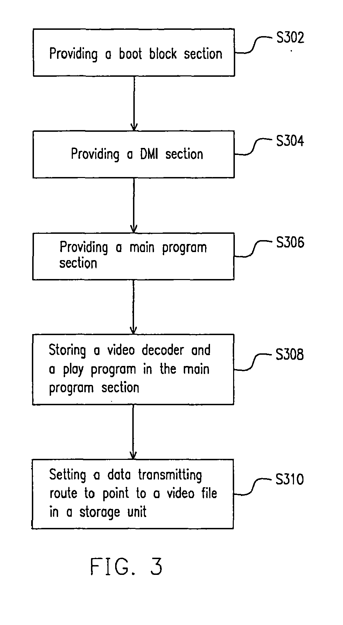

Keeping on referring to Fig. 1. The BIOS unit 106 of the computer device 100 can be a non-volatile memory such as a flash memory which stores the BIOS code. Fig. 2 is a configuration diagram showing the BIOS in the preferred embodiment of the invention. Fig. 3 is a flow chart showing steps of setting the BIOS. Refer to Fig. 2 and Fig. 3. As shown in steps S302, S304, and S306, a boot block section 202, a desktop management interface (DMI) section 204, and a main program section 206 are provided in the BIOS unit 106. In the embodiment, a video decoder 208 and a play program 210 can be stored in the BIOS unit as showed in step S308. In some embodiments, the video decoder 208 can be stored in the main program section 206.

Besides that, a data transmitting route 212 of the video decoder 208 can be set to point to a video file 222 stored in a storage unit 220 as showing in step S310. In the embodiment, the storage unit 220 can be the memory 108, the internal storage device 110, or the external storage device 114 showed in Fig. 1. Further more, the format of the video file 222 can be the MPEG-1, MPEG-2, MPEG-4, WMV, or RM format. In the embodiment, the setting of the data transmitting route 212 can be the original setting of the computer device 100 or can be changed by user in the BIOS menu, which is not limited in the invention.

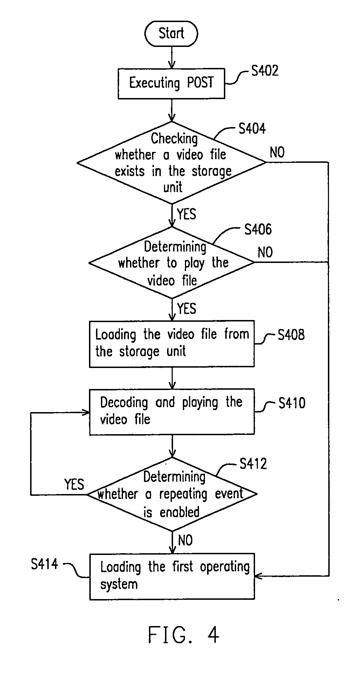

Fig. 4 is a flowchart of the computer device booting method according to the preferred embodiment of the invention. Main steps of the embodiment are as following: executing the POST; loading the video file 222 (a commercial film) from the storage unit (such as the internal storage device 110 or the external storage device 114) into the memory 108 (a volatile memory unit), wherein the computer device 100 can update the video file 222 via connecting to the network according to a presetting. In the embodiment, the presetting of the computer device 100 is that the computer device 100 is connected to the network during the booting time at regular intervals (such as every two weeks) to download the latest commercial film. Of course, user can change the presetting according to personal preference. Then, the video file 222 can be played during the time of booting the computer device 100 and the first operation system is loaded. The embodiment is further described hereinbelow.

Refer to Fig. 4. When the computer device 100 (showed in Fig. 1) is power on, the BIOS code in the BIOS unit 106 can be stored in the memory 108 and the code of the boot block section 202 (showed in Fig. 2) can be executed first. Besides that, the computer device 100 also can read the data in the DMI section 204 and execute the code of the main program section 206. Therefore, the computer device 100 can execute the POST as the step S402.

Then, in some embodiments, the step S404, checking whether the video file 222 exists in the storage unit 220, can be operated when the code of the main program section 206 is executed. In the embodiment, the video file 222 is a commercial film. Besides that, if the storage unit 220 is the external storage device 114, the BIOS also can determine whether the external storage device 114 is connected to the computer device 100.

If the video file 222 is not found in the storage unit 220 or it is determined that the external storage device 114 is not connected to the computer device 100 ("NO" in the step S404), the step S414, loading a first operating system, is directly operated to complete the booting procedure of the computer device 100.

Correspondingly, when the BIOS confirms that the video file 222 exists in the storage unit 220 ("YES" in the step S404), the step S408, loading the video file 222 from the storage unit 220 via the data transmitting route 212, is operated.

In some embodiments, before the step S408 is operated, the BIOS further can determine whether to play the video file 222 as showed in the step S406. For example, when the user does not want to watch the video file, he or she can enable a hot key (not shown) of the input device 112. When the BIOS detects that the hot key is enabled, the video file 222 is not played and the step S414 is operated directly. Correspondingly, the step S408 is operated when the BIOS does not detect that the hot key is enabled ("YES" in the step S406).

When the video file 408 is loaded, the BIOS can decode and play the video file 222 utilizing the video decoder 208 as showed in the step S410. In some embodiments, after the video file is played, it can be determined whether a repeating event is enabled as showed in step S412. In the embodiment, whether the repeating event is enabled is that whether another hot key of the input device 112 is enabled. For example, when the user wants to watch the video file 222 again, he or she can enable the hot key to replay it. That is, the BIOS detecting that the hot key is enabled ("YES" in the step S412) represents that the repeating event is enabled. At that time, the step S410 can be repeated in the embodiment of the invention. If the hot key is not enabled ("NO" in step S412) in the step S406, the repeating event is not enabled, which represents that the user does not want to watch the video file again. Therefore, the BIOS loads the first operating system from the internal storage device 110 to make the computer device 100 work properly.

As the video decoder and the play program are stored in the BIOS in the embodiment of the invention to play the video file during the booting time, user can have fun when waiting for booting the computer device. Extending the scope of application of the invention, the effect of promoting the product can be achieved.

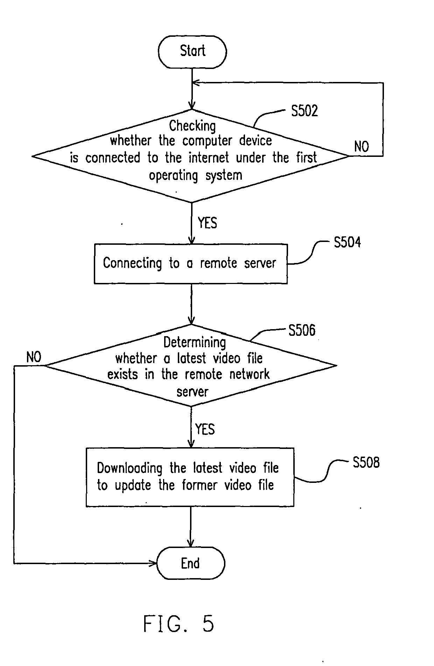

Fig. 5 is a flowchart showing the method of updating the video file. Refer to Fig. 5. The video file (the commercial film) can be updated in the booting method in the embodiment. For example, the step S502, checking whether the computer device is connected to the internet under the first operating system, is operated. If the computer device is connected to the internet, the step S504, connecting to a preset remote server (such as the remote server 134 in Fig. 1), is operated. Then, the step S506, determining whether the latest video file exists in the remote network server, is operated.

If the video file in the remote server is not the latest ("NO" in step S506), the whole procedure is finished. Similarly, if the latest video file is detected in the remote server ("NO" in step S506), the latest video file is downloaded from the remote server to the computer device to update the former video file as showed in step S508.

Although the embodiment is provided to illustrate the procedure of updating the video file, the invention is not limited by the embodiment. Refer back to Fig. 4. In some other embodiments, a second operating system can be loaded when the computer device executes the POST. The objective of loading the second operating system is to activate the network module 120 (showed in Fig. 1). When the network module 120 is activated, the computer device can download the latest video file via connecting to the remote server 134 in the internet.

The invention can be used for increasing the pleasure when the user waits for booting the computer device and advertising the product. Besides that, user can receive the updated product information from the network, so the objective of promoting the product can be achieved.

Although the present invention has been described in considerable detail with reference to certain preferred embodiments thereof, the disclosure is not for limiting the scope of the invention. Persons having ordinary skill in the art may make various modifications and changes without departing from the scope of the invention. Therefore, the scope of the appended claims should not be limited to the description of the preferred embodiments described above.

## Claims

1. A method for booting a computer device, comprising steps of:
executing the power-on self-test (POST);
loading a commercial film from a storage unit into a volatile memory unit, wherein the computer device updates the commercial film via connecting to a network according to a presetting;
playing the commercial film during the time of booting the computer device; and
loading a first operating system.

2. A booting method according to claim 1, wherein before loading the first operating system, the method further comprises steps of:
determining whether a repeating event is enabled; and
replaying the commercial film when the repeating event is enabled.

3. A booting method according to claim 1 or claim 2, wherein after loading the first operating system, the computer device updates the commercial film via connecting to the network.

4. A booting method according to claim 1 or claim 2, wherein after loading the first operating system, the computer device updates the commercial film via connecting to a remote server in the network at regular intervals.

5. A booting method according to claim 1, wherein before the step of loading the commercial film, the booting method further comprises the step of loading a second operating system for utilizing a network module of the computer device to connect to the network to update the commercial film

6. A booting method according to any preceding claim, wherein in the step of playing the commercial film during the time of booting the computer device, the commercial film is played by a play program, the play program and the BIOS system code being stored in a non-volatile memory of the computer device.
